Europäisches Patentamt

European Patent Office

Office européen des brevets

(11) Publication number: **0 429 086 B1**

## EUROPEAN PATENT SPECIFICATION

(45) Date of publication of patent specification: **04.05.94** (51) Int. Cl.5: **G01N 21/90**

(21) Application number: **90122380.0**

(22) Date of filing: **23.11.90**

(54) **Inspection device on the basis of dark field illumination.**

(30) Priority: **24.11.89 NL 8902916**

(43) Date of publication of application:
**29.05.91 Bulletin 91/22**

(45) Publication of the grant of the patent:
**04.05.94 Bulletin 94/18**

(84) Designated Contracting States:
**AT BE CH DE DK ES FR GB GR IT LI LU NL SE**

(56) References cited:
**DE-B- 1 099 211**
**US-A- 4 297 032**

**PATENT ABSTRACTS OF JAPAN, vol. 4, no. 47 (P-6)[529], 11th April 1980; & JP-A-55 018 926**

(73) Proprietor: **HEUFT SYSTEMTECHNIK GMBH**
**Brohltalstrasse 29-33**
**D-56659 Burgbrohl(DE)**

(72) Inventor: **Nunnink, Laurens**
**De Ganzeboom 165**
**NL-7443 GE Schalkhaar(NL)**

(74) Representative: **Abitz, Walter, Dr.-Ing. et al**
**Patentanwälte Abitz & Partner**
**Postfach 86 01 09**
**D-81628 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The invention relates to a device for inspecting with dark field illumination objects with at least one transparent portion, for instance glass bottles, which device comprises:

1) illuminating means;

2) positioning means for placing an object such that that object can be illuminated by the illuminating means; and

3) a video camera for sensing that object and generating video signals,

which illuminating means and which video camera are disposed relative to the positioning means such that the video camera senses no image in the case of a homogeneous transparent portion of an object without unhomogeneous parts, enclosures, bubbles, dirt or other deviations.

Such a device is known. The drawback of the known dark field illumination is that the illumination of an object is not homogeneous, whereby the detection sensitivity and therewith the detection reliability varies from place to place.

A further drawback of the known illuminating method is that at different positions of an inspected object the light has to be deflected through different angles to reach the camera and result in the forming of corresponding video signals.

In practice, only a very limited region can be inspected with sufficient reliability using the known dark field illumination. This is the reason why it has not been possible up to the present time to use a dark field illumination for instance for bottles, particularly larger bottles to roughly 300 mm in height such as wine bottles, soft drink bottles and the like.

The invention has for its object to provide a device wherewith practical homogeneous illumination can be obtained in a large region, while the differences in deflection of the light required to reach the camera remain very limited.

The invention provides for this purpose a device of the stated type characterized by

4) imaging means such as at least one positive lens and/or at least one positive mirror which are placed between the illuminating means and the positioning means and which image the illuminating means in the vicinity of the objective of the video camera.

It is noted that by "illuminating means" must be generally understood sources of electromagnetic radiation. This therefore includes for instance ultraviolet radiation and infrared radiation which cannot strictly speaking be considered as "light".

There are deviations in transparent holders such as fissures, cracks and the like which emit directional light due to their reflecting properties. In this respect it can be advantageous to make use not of one for instance more or less point-shaped light source but of for instance two light sources which are separated spatially such that the mentioned faults can be detected. Cylindrical objects such as glass bottles, jam jars and the like have for instance the general properties of a cylindrical, positive lens. Use can be made for such objects of an arrangement with two light sources placed vertically one above the other.

The stated principle of more than one light source can be generalized. An excellent homogeneity and a great detection reliability is ensured with an embodiment wherein the illuminating means comprise an illuminated part surrounding an unilluminated part. Use can for example be made of an annular light source which surrounds an unilluminated part. It can generally be stated in this respect that the unilluminated part is decisive for the detection sensitivity. The more the distance to the camera transversely of the optical axis of the camera increases, the smaller the detection sensitivity becomes. The more the said distance decreases, the greater the detection sensitivity becomes. Certainly in the case of successive inspection of mass produced objects transported by a conveyor belt it has to be ensured however that the optical stability of the system is not endangered for the sake of a great detection sensitivity.

If desired the unilluminated part could serve as secondary light source that emits light of another type. This can for instance be light of another colour or with a different polarization direction. By means of this secondary light source each object can thus also be inspected with through-passing light as well as with dark field illumination.

In the case of objects which do not automatically allow of inspection because due to their shape they systematically result in an image in the video camera, also in the case they wholly satisfy the set norm, the device according to the invention can be embodied such that the shape of the illuminated part is adapted to the form of an object for inspection. If desired it is also possible to work in per se known manner with so-called electronic masks which are included for instance in software in a signal processing unit which further processes the video signals coming from the video camera.

Attention is also generally drawn in this regard to the fact that in per se known manner the video signals can be used to control ejection means in the case of an object not satisfying the norm.

A very light and inexpensive device is embodied with a Fresnel lens. Such a lens can be manufactured to large dimensions for instance by injection moulding of transparent plastic.

With respect to the detection sensitivity it is further noted that the further the distance of a holder for inspection from the video camera, the greater the detection sensitivity becomes. That is, the more the said distance increases, the smaller the deflection of light necessary to result in a detected fault.

The invention will now be elucidated with reference to the annexed drawing, wherein:

Fig. 1 shows a first embodiment of the device according to the invention;

Fig. 2 shows a similar device with a mirror; and

Fig. 3 shows another embodiment.

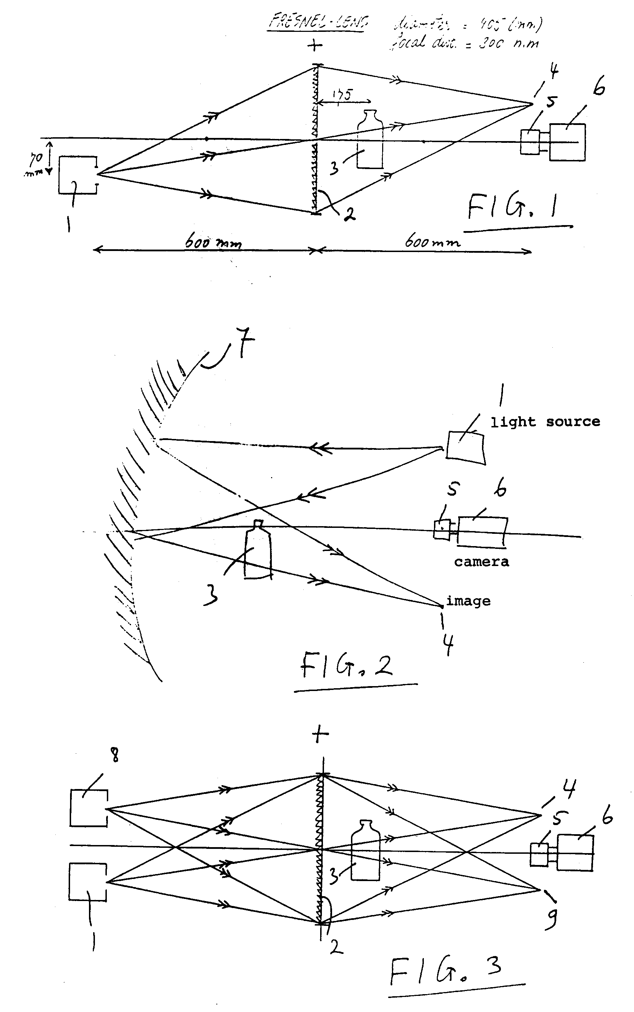

Fig. 1 shows schematically a light source 1 which illuminates a glass bottle 3 via a positive Fresnel lens 2. The light source 1 is imaged at a position designated 4. This position is located adjacent to the objective lens 5 of a video camera 6. If no object 3 is present, no light reaches the video camera 6. Nor does any light reach the video camera 6 in the case of an object 3 satisfying the norm. Only in the case of a deviation such as unhomogeneous parts, enclosures, bubbles, dirt, glass splinters and the like does a reflection or deflection of the light take place such that the video camera 6 senses light. The video signal is transmitted to signal processing means (not drawn) for further use.

Fig. 2 shows a disposition corresponding with fig. 1, with the difference however that instead of the Fresnel lens 2 use is made of a concave, i.e. positive, mirror 7. Reference is otherwise made to the discussion of fig. 1.

Fig. 3 shows a disposition which in contrast with fig. 1 is augmented with a second light source 8 which is imaged at a position 9. It can be seen from the figure that this light source 8 is also imaged adjacently of the objective lens 5 of video camera 6. The table below gives a comparison between a typical side wall inspection device for glass bottles and the device according to the invention.

Table

| Bottle number | Deviation | Known side wall inspector | Device according to the invention |
|---|---|---|---|
| | | Detection percentage | Detection percentage |
| 1 | stone | 100 | 100 |
| 2 | stone | 100 | 0 |
| 3 | air bubble | 0 | 100 |
| 4 | air bubble | 0 | 75 |
| 5 | irregular glass | 0 | 0 |
| 6 | air bubble | 0 | 100 |
| 7 | irregular glass | 75 | 100 |
| 8 | air bubble | 0 | 100 |
| 9 | stone | 90 | 100 |
| 10 | stone | 100 | 100 |
| 11 | irregular glass | 0 | 100 |
| 12 | irregular glass | 0 | 100 |
| 13 | irregular glass | 0 | 50 |
| 14 | irregular glass | 0 | 100 |

It can be seen from this table that only the stones can be detected with sufficient reliability by the known inspection device. The device according to the invention disposed in this case as side wall inspector gives clearly better results.

**Claims**

**1.** Device for inspecting with dark field illumination objects with at least one transparent portion, for instance glass bottles, which device comprises:
1) illuminating means (1);
2) positioning means for placing an object (3) such that that object can be illuminated by the illuminating means; and
3) a video camera (6) for sensing that object and generating video signals,
which illuminating means and which video camera are disposed relative to the positioning means such that the video camera senses no image in the case of a homogeneous transparent portion of an object without unhomogeneous parts, enclosures, bubbles, dirt or other deviations,
**characterized by**
4) imaging means (2,7) such as at least one positive lens and/or at least one positive mirror which are placed between the illuminating means and the positioning means and which image the illuminating means in the vicinity of the objective (5) of the video camera.

4

**2.** Device as claimed in claim 1, **characterized in that** the illuminating means comprise at least two light sources (1,8).

**3.** Device as claimed in claim 1, **characterized in that** the illuminating means comprise an illuminated part surrounding an unilluminated part.

**4.** Device as claimed in claim 3, **characterized in that** the shape of the illuminated part is adapted to the shape of an object for inspection.

**5.** Device as claimed in claim 1, **characterized in that** the imaging means comprise a Fresnel lens (2).

**Patentansprüche**

**1.** Vorrichtung zum Untersuchen von Gegenständen mit wenigstens einem transparenten Bereich, z.B. von Glasflaschen, mittels Dunkelfeldbeleuchtung, mit
1) einer Beleuchtungseinrichtung (1),
2) einer Positionierungseinrichtung zum Anordnen eines Gegenstandes (3) derart, daß der Gegenstand durch die Beleuchtungseinrichtung beleuchtet wird, und
3) einer Videokamera (6) zum Wahrnehmen des Gegenstandes und zum Erzeugen von Videosignalen,
wobei die Beleuchtungseinrichtung und die Videokamera gegenüber der Positionierungseinrichtung so angeordnet sind, daß die Videokamera im Fall eines homogenen transparenten Bereichs eines Gegenstandes ohne inhomogene Teile, Einschlüsse, Blasen, Schmutz oder andere Abweichungen kein Bild wahrnimmt,
gekenzeichnet durch
4) eine Abbildungseinrichtung (2, 7), wie wenigstens eine Sammellinse und/oder wenigstens ein Sammelspiegel, die zwischen der Beleuchtungseinrichtung und der Positionierungseinrichtung angeordnet sind und die die Beleuchtungseinrichtung in die Nähe des Objektivs (5) der Videokamera abbilden.

**2.** Vorrichtung nach Anspruch 1, dadurch gekennzeichnet, daß die Beleuchtungseinrichtung wenigstens zwei Lichtquellen (1, 8) aufweist.

**3.** Vorrichtung nach Anspruch 1, dadurch gekennzeichnet, daß die Beleuchtungseinrichtung einen leuchtenden Teil aufweist, der einen nichtleuchtenden Teil umgibt.

**4.** Vorrichtung nach Anspruch 3, dadurch gekennzeichnet, daß die Form des leuchtenden Teils der Form des zu untersuchenden Gegenstandes angepaßt ist.

**5.** Vorrichtung nach Anspruch 1, dadurch gekennzeichnet, daß die Abbildungseinrichtung eine Fresnellinse (2) aufweist.

**Revendications**

**1.** Dispositif pour l'inspection par éclairage à champ sombre d'objets comportant au moins une partie transparente, par exemple des bouteilles de verre, ce dispositif comprenant :
1) des moyens d'éclairage (1) ;
2) des moyens de positionnement pour placer un objet (2) de sorte que cet objet puisse être éclairé par les moyens d'éclairage ; et
3) une caméra vidéo (6) pour détecter cet objet et engendrer des signaux vidéo ;
lesdits moyens d'éclairage et ladite caméra vidéo étant placés par rapport aux moyens de positionnement de sorte que la caméra vidéo ne détecte pas d'image dans le cas d'une partie transparente homogène d'un objet sans éléments non homogènes, inclusions, bulles, poussières ou autres défauts ;
caractérisé en ce qu'il comprend :
4) des moyens de formation d'image (2,7), tels qu'au moins une lentille positive et/ou au moins un miroir positif, qui sont placés entre les moyens d'éclairage et les moyens de positionnement et qui forment l'image des moyens d'éclairage au voisinage de l'objectif (5) de la caméra vidéo.

2. Dispositif suivant la revendication 1, caractérisé en ce que les moyens d'éclairage comprennent au moins deux sources de lumière (1,8).

3. Dispositif suivant la revendication 1, caractérisé en ce que les moyens d'éclairage comprennent une partie éclairée entourant une partie non éclairée.

4. Dispositif suivant la revendication 3, caractérisé en ce que la forme de la partie éclairée est adaptée à la forme d'un objet à inspecter.

5. Dispositif suivant la revendication 1, caractérisé en ce que les moyens de formation d'image comprennent une lentille de Fresnel (2).

EP 0 429 086 B1

FRESNEL-LENS  diameter = 405 (mm)
focal dist. = 300 n.m

175

70 mm

600 mm    600 mm

FIG. 1

7

light source

s   6

camera

image

4

3

FIG. 2

8

4
5   6

3

9

FIG. 3

7